**Europäisches Patentamt**

**European Patent Office**

**Office européen des brevets**

(19)

(11) Veröffentlichungsnummer : **0 081 835**
**B1**

(12) **EUROPÄISCHE PATENTSCHRIFT**

(45) Veröffentlichungstag der Patentschrift :
24.04.85

(21) Anmeldenummer : 82111538.3

(22) Anmeldetag : 13.12.82

(51) Int. Cl.⁴ : **H 04 L   7/02**

(54) **Regenerator für ein digitales Nachrichtensystem.**

(30) Priorität : 15.12.81 DE 3149731

(43) Veröffentlichungstag der Anmeldung :
22.06.83 Patentblatt 83/25

(45) Bekanntmachung des Hinweises auf die Patenterteilung : 24.04.85 Patentblatt 85/17

(84) Benannte Vertragsstaaten :
AT DE NL

(56) Entgegenhaltungen :
US-A- 3 532 999
US-A- 3 878 334
US-A- 4 298 987
1979 INTERNATIONAL SYMPOSIUM ON CIRCUITS
AND SYSTEMS, Juli 1979, Tokyo, Proceedings, IEEE,
Kat. Nr. 79CH1421-7 CAS, Seiten 804-805, New York,
USA

(73) Patentinhaber : **Siemens Aktiengesellschaft**
**Berlin und München Wittelsbacherplatz 2**
**D-8000 München 2 (DE)**

(72) Erfinder : **Pooch, Gerhard, Ing.grad.**
**Nordendstrasse119**
**D-8080 Emmering (DE)**
Erfinder : **V.d. Neyen, Hans-Jürgen, Ing.grad.**
**Damaschkestrasse 63**
**D-8000 München 80 (DE)**

EP 0 081 835 B1

## Beschreibung

Die Erfindung bezieht sich auf einen Regenerator für ein digitales Nachrichtensystem, der mit Empfangszeichen im Basisband gespeist wird und eine Regelschleife aufweist zur Erzeugung eines von der mittleren Zeilengeschwindigkeit abhängigen Taktes zur Abtastung der empfangenen Zeichen.

Digitale Nachrichtensysteme übermitteln Datenströme zwischen einer Sendestelle und einer oder mehreren Empfangsstellen. Die Verbindung kann über eine Festdrahtleitung oder auf dem Funkwege zustande kommen. Wesentlicher Bestandteil eines digitalen Nachrichtenempfängers ist der Regenerator, in dem eine systemoptimale Erneuerung der empfangenen Nachricht erfolgt. Hierzu sind im wesentlichen zwei Dinge zu erfüllen, nämlich Erzeugen eines von der mittleren Zeichengeschwindigkeit abhängigen Taktes bei möglichst großer Geräuschbefreiung in der Regelschleife und optimales Lesen der empfangenen Zeichen mit diesem Takt.

In Abhängigkeit vom Verhalten des Übertragungsmediums führen nämlich Dämpfung, Schwund und Laufzeitverzerrungen zu Lesbarkeitsverlusten am Empfangsort. Bei Mobilfunkstrecken führen die frequenz-, zeit- und ortsabhängige Feldstärke, das sogenannte Rayleigh-Fading und in einigen Fällen auch Mehrwegeverzerrungen zu stark variierenden Lesbarkeitsverlusten. Für die Lesbarkeit der Zeichen im Empfänger ist somit für ein gegebenes System, d. h. ein System, welches für die maximal zu erwartende geografische Entfernung, die benutzte Radiofrequenz und die verwendete Bit-Rate eine ausreichend große Sendeleistung bereitstellt, die momentane Feldstärke am Empfangsort maßgebend.

Sollen weitere Sende/Empfangsstellen dem Datennetz zugeschaltet werden, so müssen sie, bevor sie sich aktiv am Datenaustausch beteiligen können, aus einem asynchronen Zustand auf das Datennetz synchronisiert werden. Je nach Art des Datentransfers sind für den Synchronisationsvorgang verschiedene Arten der Synchronisation notwendig. Für die fehlerfreie Erkennung und Verarbeitung der Empfangsdaten ist der bereits vorstehend erläuterte, auf das Eingangssignal nachgeführte Empfangstakt erforderlich. Dies erfolgt über die Bitsynchronisation.

Erfolgt die Datenübertragung blockstrukturiert, so wird beim Einsynchronisieren der Sende/Empfangsstelle neben der Bitsynchronisation zusätzlich noch die Blocksynchronisation erforderlich.

Für die Ermittlung des Block- und Phasenbezugs werden an definierten Blockstellen spezielle Codeworte (Barkercode) übertragen. die auf der Empfangsseite durch Autokorrelation ausgewertet werden.

Für ein mobiles Funknetz soll ein solcher Regenerator mit erweitertem Aufgabenbereich eingesetzt werden. Bei diesem mobilen Funknetz handelt es sich um ein Synchronnetz, in dem der Daten- und Sprechverkehr zwischen den mobilen Funkteilnehmer-Stationen und den stationären Fest-Stationen bei fester Funkbereichszuordnung abgewickelt wird. Bevor ein Gesprächsaufbau zustande kommt, ist ein organisatorischer Datenaustausch zwischen Mobilteilnehmer und Feststation notwendig, wie z. B. Anmeldung, Umbuchung oder Wahlnummernübertragung. Für die Abwicklung ist ein eigener Funkkanal (Organisationskanal) vorgesehen, in dem mehrere Feststationen im Vielfachzugriff, also mit fester Zeitplatzzuordnung arbeiten können. Über diese Zuordnung hat der Mobilteilnehmer die Möglichkeit, über die Empfangsqualitätskontrolle mit dem für ihn am günstigsten Funkbereich eine organisatorische Datenverbindung aufzunehmen. Nach diesen Aufbau werden aber weiterhin in allen Zeitschlitzen (Funkbereichen) die Empfangsqualität und die Einstellkriterien erfaßt, um bei Veränderung der Funkfeldparameter, bedingt durch Ortsveränderung des Mobilteilnehmers, sofort den nun optimalen Funkbereich zu erkennen und die erforderlichen Stellinformationen parat zu haben. Werden die Systemeigenschaften in dieser Weise erfüllt, so kann problemlos ein Umbuchvorgang erfolgen.

Der Erfindung liegt die Aufgabe zugrunde, für ein digitales Nachrichtensystem der vorstehend beschriebenen Art einen Regenerator mit systemspezifischen Zusatzaufgaben zu schaffen.

Diese Aufgabe wird gemäß der Erfindung in der Weise gelöst, daß die Taktregelschleife einen Mikroprozessor enthält, der eingangsseitig über einen Zählcodierer mit einem Zeichenwechseldetektor verbunden ist und mit einem seiner Ausgänge einen Phasenschieber steuert, dem an einem zweiten Eingang ein mit einer Nachführung versehener Normalfrequenzgenerator angeschaltet ist und dessen Ausgang mit einem im Empfangsweg liegenden Regenerations-Flip-Flop verbunden ist, und daß weitere Ausgänge des Mikroprozessors mit der Nachführung des Normalfrequenzgenerators und einem im Empfangsweg vor der Taktregelschleife eingeschalteten Begrenzer verbunden sind sowie durch den Mikroprozessor und den Zählcodierer ermittelte Meßwerte und Informationen zur Jittermessung und Rahmen- und Blocksynchronisation liefern.

Mit dem erfindungsgemäßen Regenerator erfolgt neben der Erzeugung der Regenerationstaktphase in vorteilhafter Weise auch die Ermittlung von Qualitätskriterien der Empfangsdaten wie Jitter und zugehörige Feldstärke, die rechnergesteuerte Anpassung der Regenerationsschwelle und die daraus ableitbare Nachführung des Frequenznormales sowie ferner die ohne Bit-Synchronismus erzielbare Rahmen-Synchronisation, die eine praktisch verlustfreie Zugriffsbereitschaft in synchronen Vielfachzugriff-Systemen garantiert.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

Es zeigen :
Figur 1   einen Regenerator im Prinzipschaltbild,
Figur 2   eine Skizze für den Ähnlichkeitverlauf bei der Rahmensynchronisation,
Figuren 3 und 4   einen Regenerator im Blockschaltbild und den zugehörigen Pulsablaufplan des Zählcodierers,
Figuren 5 und 6   einen weiteren Regenerator im Blockschaltbild und den zugehörigen Pulsablaufplan des Zählcodierers,
Figur 7   ein Diagramm der Rechenadressenverschiebung im Regenerator nach Fig. 5 und
Figur 8   einen weiteren Regenerator im Blockschaltbild.

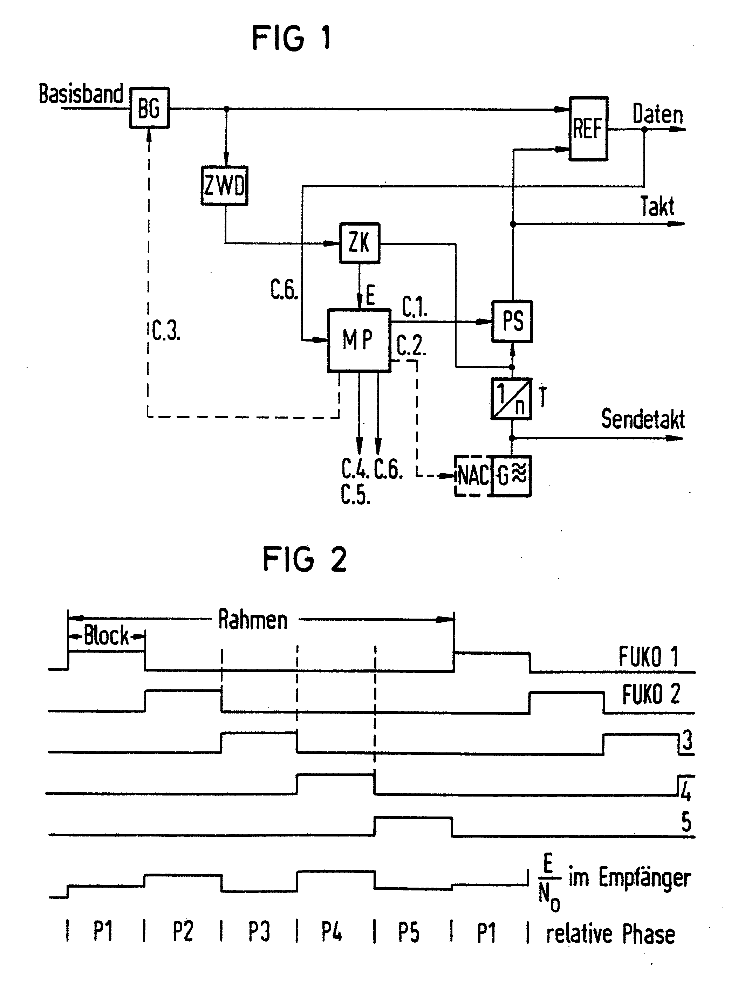

Der Regenerator nach Fig. 1 enthält im Empfangsweg für das Basisband einen Begrenzer BG und eine als Regenerations-Flip-Flop RFF bezeichnete Anordnung zur Abtastung der empfangenen Zeichen sowie eine Regelschleife, die vom Begrenzerausgang über einen Zeichenwechseldetektor ZWD, einen Zählcodierer ZK, einen Mikroprozessor MP und einen Phasenschieber PS an einen zweiten Eingang des Regenerations-Flip-Flop RFF angeschlossen ist. Dlesem sind ausgangsseitig die regenerierten Daten entnehmbar. Ein mit einer Nachführung NAC verbundener Normalfrequenzgenerator G ist über einen Teiler T einerseits an den Phasenschieber PS und andererseits an den Zählcodierer ZK angeschlossen.

Durch entsprechende Ausbildung des Zählcodierers und der Software-Zusätze wird erreicht, daß diese Schaltungsanordnung für weitere, wesentliche systemabhängige Aufgaben mit verwendet werden kann. Einzelheiten dieser besonderen Ausbildung sind in den weiteren Figuren dargestellt und werden bei deren Beschreibung näher erläutert. In der Fig. 1 sind diese Möglichkeiten lediglich durch Pfeile und Verbindungslinien zwischen einzelnen Baugruppen dargestellt und mit den Bezeichnungen C1 bis C6 versehen. Diese bedeuten folgendes :

C1) Regenerationstakt-Regelung (Verbindung vom Mikroprozessor MP zum Phasenschieber PS)
Über eine entsprechende Einstellung am Phasenschieber PS legt der Mikroprozessor MP die Phasenverschiebung des starren Sendetaktes auf die optimale Lesetaktphase fest. Somit kann im Regenerations-Flip-Flop RFF das Basisbandsignal mit kleinstmöglichen Fehlern regeneriert werden.

C2) Langsame Nachführung der Normalfrequenz (strichlierte Verbindung vom Mikroprozessor MP zur Nachführung NAC)
Hierdurch wird erreicht, daß kurzzeitige Störeinflüsse durch Unterbinden der Nachführung keinen Einfluß auf die Normalfrequenz haben.

C3) Verbessern der optimalen Leseschwelle in gleichstromgekoppelten Systemen (strichlierte Verbindung vom Mikroprozessor MP zum Begrenzer BG) Die zeitlich gegenläufige Verschiebung des Zeichendauerzustandes logisch « 1 » und logisch « 0 » führt bei der Regeneration zu Lesbarkeitsverlusten. Die Ursache solcher Erscheinungen ist durch Frequenzablagen oder Mehrwegeeffekte längerer Umwege begründet. Die Veränderung des Zeichendauerzustandes ist abhängig vom Verhältnis der empfangsseitigen Basisbandsignalamplitude zur Spannungsdifferenz zwischen deren Gleichstrommittelwert und der eingestellten Entscheiderschwelle. Um ein exaktes Nachregeln der Schwellwerteinstellung zu ermöglichen, werden Signalamplitude und Spannungsdifferenz in einem A/D-Wandler erfaßt und daraus im Rechner der Korrekturwert für den Schwellwertentscheider ermittelt. Die Spannungsdifferenz kann dabei den Wert der halben Signalamplitude überschreiten, ohne daß die Korrekturgenauigkeit beeinträchtigt wird. Durch eine Verschiebung des Schwellwertes im Schwellwertentscheider des Begrenzers BG kann die volle Leseempfindlichkeit wieder zurückgewonnen werden.

C4) Jittermessung zur Qualitätsbewertung der empfangenen digitalen Signale (Ausgang C4 des Mikroprozessors MP)
Aus der zeitlichen Streuung der Eingangs-Zeichenwechsel gegenüber dem vom Rechner ermittelten Mittelwert kann direkt die Empfangsgüte des empfangenen Basisbandsignales abgeleitet werden. Als Kriterium bestimmt es die weitere Verarbeitung der Daten oder Auslösen der Funkverbindung.

C5) Rahmensynchronisation (Ausgang C5 des Mikroprozessors MP)
Bei Betrieb eines digitalen Funkempfangsgerätes mit Regenerator ergibt sich in Organisationskanälen mit Vielfachzugriff die Möglichkeit der Rahmensynchronisation im Mobilgerät durch Ähnlichkeitsvergleich der Phasen P1... P5 (vergleiche hierzu die Skizze nach Fig. 2) und der zusätzlich herangezogenen Feldstärken $E/N_0$. Dabei ist in einem Diagramm der Rahmen für mehrere Funkkonzentratoren FUK01... FUK05 dargestellt und darunter die Feldstärke $E/N_0$ im Empfänger sowie die relative Phase. Die Feldstärken werden durch ausreichend viele Proben, wobei das zu jeder Probe gehörende Zeitintervall wesentlich kleiner sein muß als ein Block, im Mikroprozessor bewertet. Durch Ähnlichkeitsvergleich nach einigen Rahmen ist ein Rahmenbezug vorhanden.

C6) Blocksynchronisation (Ausgang C6 des Mikroprozessors MP)
Die Rahmensynchronisation in vorstehend geschilderten Weise erfolgt nur grob. Nach Ermitteln der geeigneten Lesephase für das am besten empfangene Blockintervall erfolgt mit dieser Lesephase im

3

Regenerator ein gezielter Lesevorgang der Empfangsdaten im Mikroprozessor MP. Die in jedem Block vorhandene Präambel wird mit dem Erwartungswert verglichen und, sobald die Präambel erkannt wurde, gibt der Mikroprozessor MP dieses nach außen bekann. Damit ist die Blocksynchronisation beendet.

Die Kombination der Meßdatenerfassung in Form der Zählcodierschaltung und der Meßdatenverarbeitung in Form des Mikroprozessors ermöglicht eine hohe Flexibilität. Da die Zählcodierschaltung unabhängig von der Empfangsdatenrate praktisch bis zu der technologisch bedingten, oberen Grenzfrequenz arbeitet und sich der Mikroprozessor an die jeweilige Aufgabe durch Softwareänderung leichter anpassen läßt, erhält man durch diese Kombination ein äußerst universelles System.

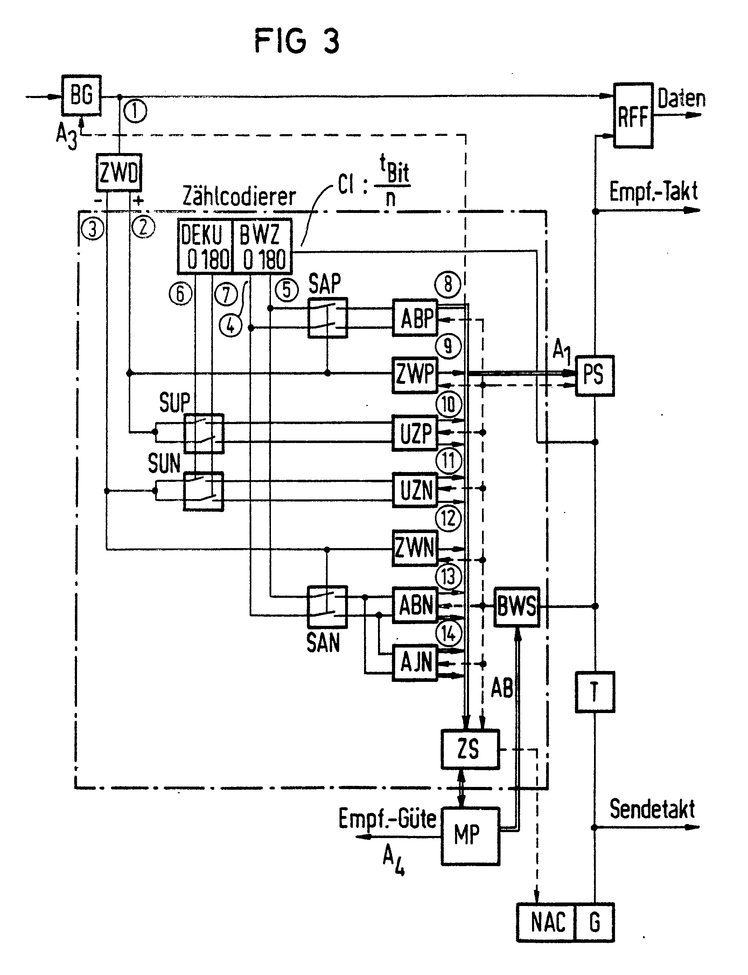

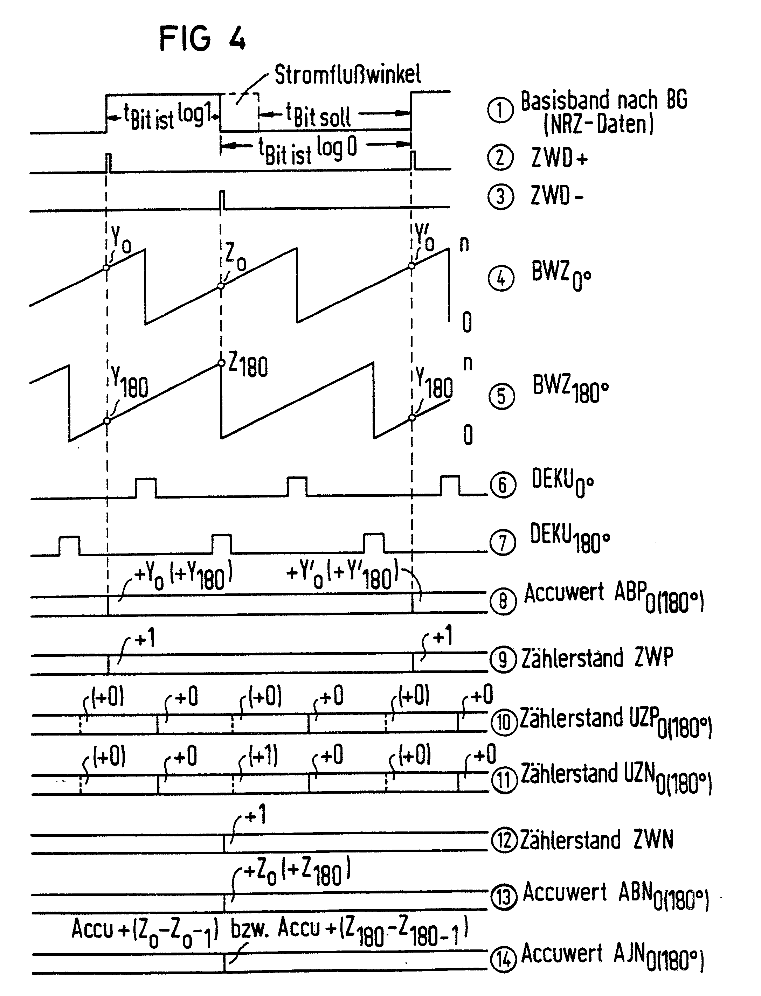

Fig. 3 zeigt eine erste Ausführungsform des Regenerators nach dem Prinzipschaltbild von Fig. 1, bei dem der in spezieller Weise ausgebildete Zählcodierer ZK in einem strichpunktiert umrandeten Kästchen enthalten ist. Diese Anordnung ist besonders geeignet für den Einsatz in Systemen, bei welchen der Mittelwert der zeitlichen Eingangszeichenwechsel-Verteilung zwar jede beliebige Phasendifferenz zum internen Bezugstakt (Bewertungskennlinie) einnehmen kann, deren Streuung (Jitter) aber weniger als Bit/2 beträgt. Die innerhalb der Schaltung in Kreisen eingezeichneten Zahlen entsprechen den an diesen Stellen vorliegenden Signalverläufen oder Zählerständen, die im Pulsablaufplan in Fig. 4 graphisch dargestellt sind.

Der Zeichenwechseldetektor ZWD in der Taktregelschleife liefert zwei nach Polarität getrennte Ausgangssteuerpulse (2 und 3 in Fig. 4). Dies ist nötig für eine getrennte Bewertung der Zeichenwechsel-Polarität (positiv oder negativ), um später im Rechner die Empfangstaktphase und den Stromflußwinkel zu ermitteln.

Die Lage der Zeichenwechsel wird mit einer vom internen, starren Bezugstakt abgeleiteten sägezahnförmigen, bitbreiten Bewertungskennlinie verglichen. Da die Eingangs-Zeichenwechsel jede beliebige Lage auf der Sägezahnkurve einnehmen können, die Mittelung einer Zeichenwechsel-Verteilung über den Sägezahnsprung jedoch erheblichen Hardware- und Softwareaufwand erfordert, werden alle Zeichenwechsel im Meßzeitraum zusätzlich an einer um Bit/2 verschobene Sägezahnkennlinie verglichen. Zur Erzeugung der Bewertungskennlinien ist ein Bewertungszähler BWZ vorgesehen, der an seinem Ausgang 0 die unverschobene Kennlinie, am Ausgang 180° die um Bit/2 verschobene Kennlinie liefert (Signale 4 und 5 in Fig. 4). Im Prinzip kann der Bewertungszähler als Aufwärtszähler realisiert werden. Der Bewertungszähler BWZ ist über einen Teiler T mit dem Normalfrequenzgenerator G verbunden. Dieser liefert den Versorgungstakt CI, dessen Höhe das Auflösungsvermögen der Meßanordnung bestimmt. So werden beim Auftreten eines Zeichenwechsels zwei aktuelle Zählerstände in den nach Zeichenwechselpolarität getrennten Akkumulatoranordnungen ABP bzw. ABN aufaddiert, die über jeweils einen Akkumulationsschalter SAP bzw. SAN für die positive und negative Flanke mit den Ausgängen 0 und 180° des Bewertungszählers BWZ verbunden sind (8 und 13 in Fig. 4). Diese Schalter SAP und SAN werden von den Ausgangssteuerpulsen des Zeichenwechseldetektors ZWD angesteuert. Aus den Ergebnissen der Doppelakkumulatoranordnungen ABP und ABN, die ausgangsseitig über einen Datenbus mit dem Mikroprozessor MP, dem ein Zwischenspeicher ZS vorgeschaltet ist, verbunden sind, läßt sich der zeitliche Mittelwert der Zeichenwechsel ermitteln. Die Zeichenwechselveränderung (Jitter) wird in der der Doppelakkumulatoranordnung ABN parallel geschalteten Funktionseinheit AJN erfaßt und akkumuliert, wobei nur die Erfassung für eine Zeichenpolarität notwendig ist. Es sind ferner Zeichenwechselzähler ZWP und ZWN für die positive und negative Flanke vorgesehen, die mit dem entsprechenden Ausgang für positive und negative Ausgangssteuerpulse des Zeichenwechseldetektors ZWD verbunden sind. Die nach Polarität getrennten Zeichenwechsel ZWP und ZWN erfassen die Gesamtanzahl der im Bewertungszeitraum aufgetretenen Zeichenwechsel (9 und 12 in Fig. 4). Eine Entscheidung darüber, welches bewertungskennlinienbezogene Ergebnis im Rechner weiterverarbeitet wird, hängt letztlich davon ab, wieviele Zeichenwechsel in den Unsicherheitsbereich, also in den Bereich des Sprungs der Sägezahnfunktion, gefallen sind. Hierfür ist eine Decodiereinrichtung DEKU vorgesehen, die am Ausgang 0 den Unsicherheitsbereich der nicht verschobenen, am Ausgang 180° den der um Bit/2 verschobenen Bewertungskennlinie liefert. Die Ausgänge 0 und 180° der Decodiereinrichtung DEKU sind über von den Ausgangssteuerpulsen des Zeichenwechseldetektors ZWD angesteuerte Schalter SUP und SUN mit Ereigniszählern UZP bzw. UZN verbunden, die die Steuerpulse im Unsicherheitsbereich zeichenwechselpolar erfassen (10 und 11 in Fig. 4). Die Auswahl der Ergebnisse nach der Bewertungskennlinie erfolgt im Rechner separat für jede Zeichenwechselpolarität. Der Bewertungszeitraum wird dabei über eine Bewertungsintervallsteuerung BWS festgelegt, die über den Teiler T mit dem Normalfrequenzgenerator G und über einen Datenbus AB mit dem Mikroprozessor MP verbunden ist. Die Gesamtinformation eines Bewertungsintervalles wird, bevor sie in den Rechner (Mikroprozessor) MP gelangt, im Zwischenspeicher ZS zwischengespeichert. Der Auslesevorgang vom Zwischenspeicher erfolgt über einen in der Bewertungsintervallsteuerung BWS enthaltenden Decoder, welcher direkt am Adressbus des Rechners liegt. Im folgenden Intervall wird der Rechner die Information zu beliebigen Zeitpunkten in den Rechnerspeicher übertragen und auswerten.

Die nachfolgenden Erläuterungen dienen der Funktionsbeschreibung des Zählcodierers nach Fig. 3 und zwar zunächst nach erfolgter Synchronisierung. Der Zählcodierer ZK gibt folgende Daten ab : Die summierte Phase für positive Zeichenwechsel mit der Codiererkennlinie 0 und der Codiererkennlinie 180°, die summierte Phase für negative Zeichenwechsel mit der Codiererkennlinie 0 und der Codiererkennlinie 180°, die Anzahl der positiven Zeichenwechsel ZWP und der negativen Zeichenwechsel ZWN, die Anzahl der positiven Zeichenwechsel der Codiererkennlinie 0 und 180°, die im Sprungbereich lagen ($UZP_0$ und $UZP_{180_0}$), die Anzahl der negativen Zeichenwechsel der Codiererkennlinie 0 und 180°, die im Sprungbereich lagen ($UZN_0$ und $UZN_{180}$) und die Summe der Streuwerte der negativen Zeichenwechsel ($\Sigma AJN$).

Die erste Entscheidung, ob die Daten der 0°-Codiererkennlinie oder die der 180°-Codiererkennlinie verwendet werden, wird durch Abfragen der Angaben der Ereigniszähler $UZP_n$ und $UZN_n$ entschieden : Sind die 0°-Angaben 0, so werden diese verwendet, andernfalls die 180°-Werte. Es werden folgende Werte errechnet : Die aktuelle positive Phase APP, die aktuelle negative Phase ANP, die aktuelle Phase als Mittelwert der positiven und negativen Phase mit K = 0 oder 180°, die aktuelle betragsmäßige Phase für den Begrenzer und der aktuelle Jitter AJ als Maß für die Zeichenverzerrungen.

Vor der Synchronisation werden die vorstehend genannten Werte für wesentlich kürzere Zeitintervalle ermittelt und gespeichert. Zu Synchronsystemen mit Vielfachzugriff, wie dem Organisationskanal des einleitend beschriebenen Funknetzes, werden die Zeitintervalle als ganzzahlige Bruchteile, z. B. eines Blockes, gewählt. Durch Beobachten im Rechner von ähnlichen Daten für mehrere Teilblöcke wird eine grobe Blocksynchronisation erreicht. Mit dieser Kenntnis veranlaßt der Mikroprozessor MP das System direkt, mit bekannter Bitlesephase an den Phasenschieber PS nach einem Rahmen gezielt die Präambel zur Blocksynchronisation zu lesen. Vorteilhaft ist hierbei, daß wesentlich kürzere Präambeln verwendet werden können, da die Vortäuschungswahrscheinlichkeit für die Präambel durch das grob bekannte Zeitintervall zur Blocksynchronisation reduziert wird.

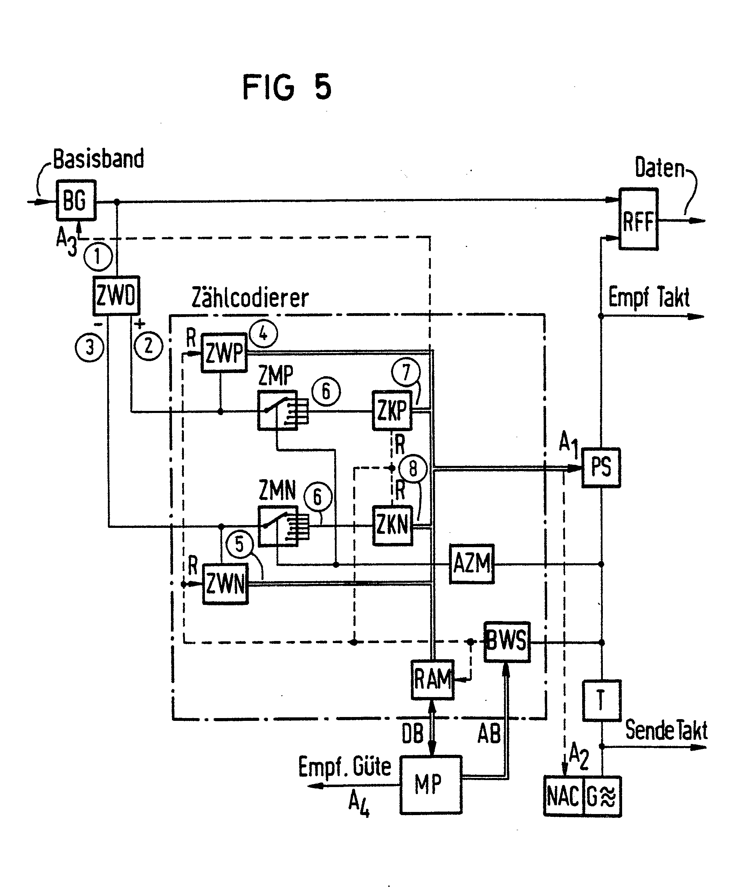

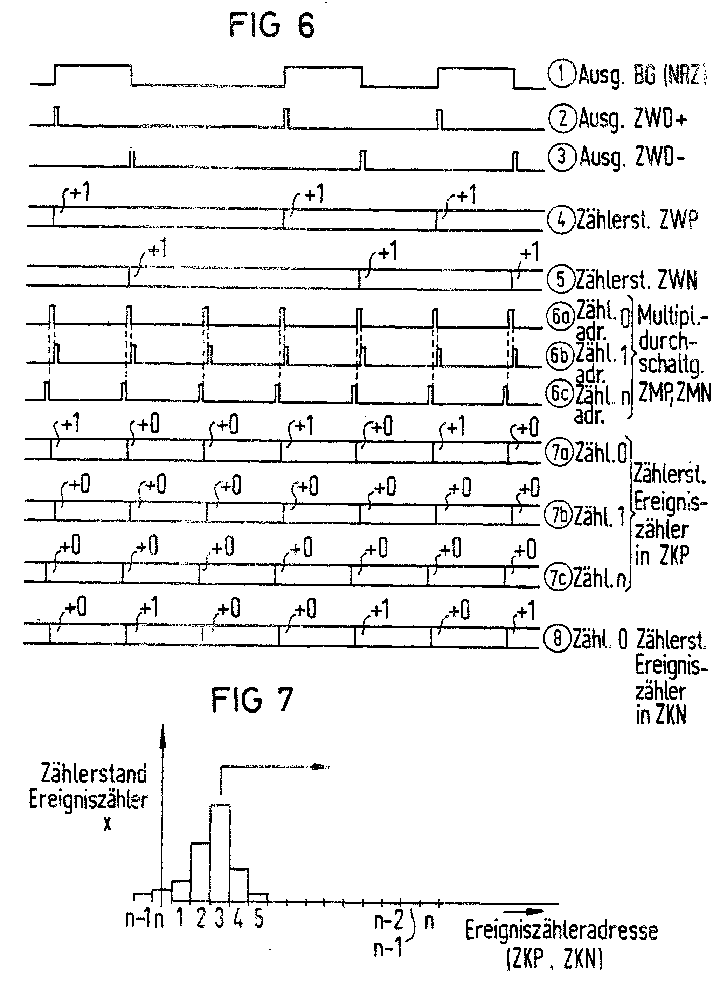

Fig. 5 zeigt das Blockschaltbild einer weiteren Ausführungsform des Regenerators, bei dem der in spezieller Weise ausgebildete Zählcodierer ZK in einem strichpunktiert umrandeten Kästchen enthalten ist. Diese Anordnung ist besonders geeignet für Systeme mit breitbandigen Datenkanälen. Der Mittelwert der Zeichenwechsel-Verteilung kann jede beliebige Phasendifferenz zum internen Bezugstakt einnehmen, wobei auch der Phasenjitter des Eingangssignales über die volle Breite eines Bits streuen kann. Die innerhalb der Schaltung in Kreisen eingezeichneten Zahlen entsprechen den an diesen Stellen vorliegenden Signalverläufen oder Zählerständen, die im Pulsablaufplan in Fig. 6 graphisch dargestellt sind. Abgesehen von der unterschiedlichen Ausbildung des Zählcodierers ZK, entspricht der Schaltungsaufbau von Fig. 5 im wesentlichen dem nach Fig. 3.

Das Basisbandsignal wird, wie bei der Schaltung nach Fig. 3, im Begrenzer BG flankenversteilert und liefert am Ausgang des Zeichenwechseldetaktors ZWD entsprechend der Zeichenwechselpolarität Steuerpulse, die im Bewertungszeitraum in den Ereigniszählern ZWP und ZWN gezählt werden. Zum anderen werden diese Steuerpulse getrennt nach Polarität über jeweils eine Multiplexeinrichtung ZMP und ZMN Zählcodierketten ZKP bzw. ZKN durchgeschaltet. Die Zählcodierketten ZKP und ZKN bestehen aus Ereigniszählern, die über die jeweilige Multiplexerstellung von ZMP bzw. ZMN zyklisch angesprochen werden und deren Anzahl letztlich die Meßgenauigkeit der Einrichtung bestimmt. Die Ereigniszähler ZWP und ZWN und Zählcodierketten ZKP und ZKN sind, ebenso wie der Phasenschieber PS, über einen Datenbus mit dem Mikroprozessor MP, dem ein Zwischenspeicher RAM vorgeschaltet ist, verbunden. Die Ansteuerung der beiden Multiplexeinrichtungen ZMP und ZMN erfolgt über einen Adresszähler AZM, der vom starren Sendetakt des Normalfrequenzgenerators G mit dem nachgeschalteten Teiler T angesteuert wird und die Adressierung Modulo Bit-Dauer wiederholt. Die Informationsübergabe in den Mikroprozessor MP entspricht der Anordnung nach Fig. 3, nämlich über den Zwischenspeicher RAM und eine Bewertungsintervallsteuerung BWS mit Adressdecoder.

Bevor der Rechner (Mikroprozessor) MP die Ergebnisse mittelt, muß eine auf die Rechnerarbeitsweise bezogene Relativierung vorgenommen werden. Die Mittelung im Rechner wird schwierig, wenn die Verteilercharakteristik der bewerteten Zeichenwechsel in den Bereich des Adressierungssprunges (zyklischer Sprung von höchstwertiger Adresse auf niederwertigste Adresse im Bitdauerabstand) zu liegen kommt. Um eine Verfälschung des Mittelungsergebnisses zu vermeiden, sollte daher die Zähleradresse mit dem geringeren Zählerstand auf die Sprungstelle der durch die Hardwareanordnung bestimmten Bewertungskennlinie gelegt werden.

Da die Eingangszeichenwechsel eine beliebige Phasendifferenz zum Bezugspunkt einnehmen können, ist rechnerintern eine Adressverschiebung für die Verteilungscharakteristik vorgesehen (vergleiche Fig. 7). Dabei ist der Zählerstand der Ereigniszähler über der Ereigniszähleradresse aufgetragen. Durch die Verschiebung kommt das Maximum auf die Adresse n/2 zu liegen. Nach dem Mittelungsvorgang der beiden Zeichenwechsel-Verteilungsfunktionen (positiv und negativ) sind für die Ermittlung von Empfangstaktphase und Stromflußwinkel die Verschiebeadressen wieder zu berücksichtigen.

Die nachstehenden Ausführungen dienen der Erläuterung der Funktion des Regenerators nach Fig. 5. Nach jedem Meßzyklus werden die Meßwerte zur Weiterverarbeitung im RAM-Zwischenspeicher abgelegt. Der Mikroprozessor MP enthält eine komplette statistische Verteilungsdichtefunktion der Phase der Zeichenwechsel angeboten, wie in Fig. 7 angedeutet ist. Er bekommt auch die Gesamtzahl der beiden Zeichenwechselarten ZWP und ZWN mitgeteilt. Es werden zunächst die Mittelwerte durch Summieren der einzelnen Dichteangaben bis zum 50 %-Wert von ZWP und ZWN gebildet, so daß man die aktuelle positive Phase erhält. Die codiererbezogene Phase des zuletzt addierten Dichtewertes ist dann die errechnete Phase. Das gleiche wird mit den Dichtewerten der negativen Zeichenwechsel durchgeführt zur Ermittlung der aktuellen negativen Phase. Zusätzlich ist noch eine Relativierungskonstante zur berücksichtigen, die den jeweiligen Absolutbezug zur äußeren Phase am Phasenschieber PS herstellt.

Der aktuelle Jitter wird durch Differenzen-Summation der einzelnen Dichtewerte für nur eine Art der Zeichenwechsel ermittelt.

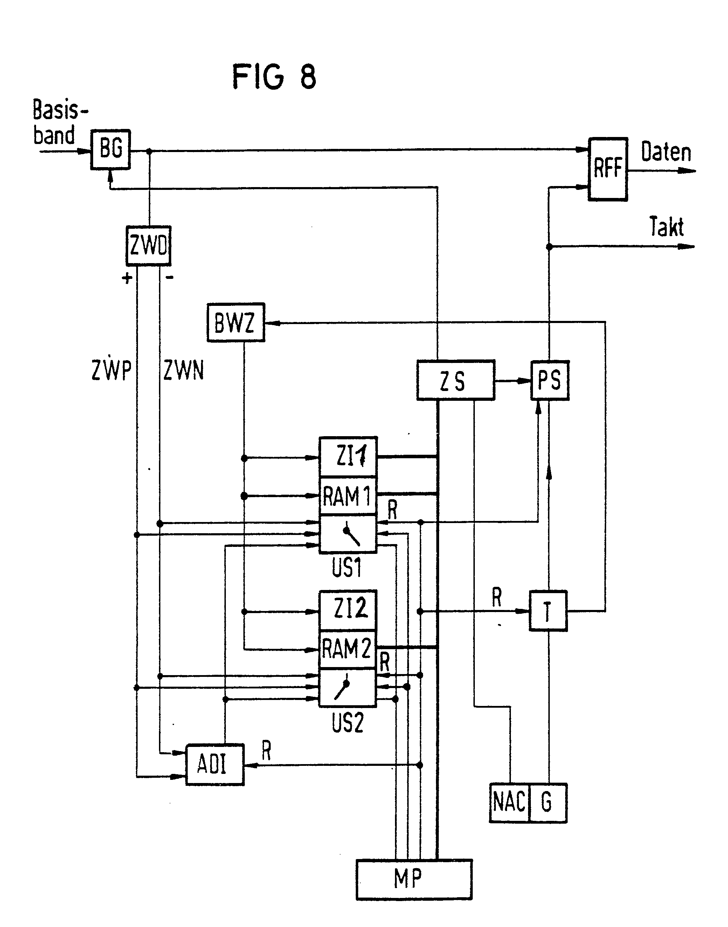

Eine weitere Ausführungsform eines Regenerators ist im Blockschaltbild nach Fig. 8 dargestellt. Dieser enthält ebenfalls die typischen Regeneratorkomponenten, wie sie auch in Fig. 3 und 5 enthalten sind, nämlich einen Begrenzer BG, ein Regenerations-Flip-Flop RFF, einen Zeichenwechseldetektor ZWD, einen Phasenschieber PS, einen Normalfrequenzgenerator G mit einer Nachführreinrichtung NAC und einem nachgeschalteten Teiler T und einen Mikroprozessor MP. Kennzeichnend für diese Lösung ist die Verwendung nur eines Bewertungszählers BWZ, der eine binäre Zahlenfolge von 0 bis n erzeugt mit einem Vielfachen (n + 1) des Nachrichtentaktes. Die Zahlenfolge wird zyklisch wiederholt.

Die beiden Ausgangspulsfolgen des Zeichenwechseldetektors ZWD, nämlich ZWP für positive Zeichenwechsel und ZWN für negative, gelangen parallel auf eine Speicheranordnung aus einem Baustein ZI1 für Zusatzinformationen, einem Speicher RAM1 und einem Umschalter US1 sowie auf eine weitere Speicheranordnung aus einem Baustein ZI2 für Zusatzinformationen, einem Speicher RAM2 und einem Umschalter US2. Ferner steuern die Pulsfolgen ZWP und ZWN einen Binärzähler zur internen Adressenerzeugung ADI. Der Binärzähler ist außerdem eingangsseitig mit dem Mikroprozessor MP und ausgangsseitig mit den Umschaltern US1 und US2 verbunden, die bezüglich Mikroprozessor und Codierer gegensinnig wirken, so daß zur gleichen Zeit immer eine Speicheranordnung dem Mikroprozessor MP zugeordnet ist und die andere dem Codierer. Der Bewertungszähler BWZ ist eingangsseitig über den Teiler T mit dem Normalfrequenzgenerator G verbunden und ausgangsseitig an die Bausteine ZI1 und ZI2 für Zusatzinformationen und die Speicher RAM1 und RAM2 angeschlossen. Die Bausteine für Zusatzinformationen und die Speicher sind über einen Datenbus mit dem Mikroprozessor MP und einem Zwischenspeicher ZS verbunden, der ausgangsseitig an den Phasenschieber PS angeschlossen ist und ferner eine Verbindung mit der Nachführung NAC und zum Begrenzer BG aufweist.

Auf der Codiererseite geschieht dabei folgendes : Jeder Zeichenwechselpuls bewirkt die Übernahme des Momentanwertes des Bewertungszählers BWZ in eine Speicherzelle des Speichers RAM. Dabei werden die Codierwerte für positiven und negativen Zeichenwechsel ZWP und ZWN in den getrennten Speicherbereichen (RAM1 bzw. RAM2) abgelegt, was durch unmittelbares Steuern des höchstwertigen Adress-Bit im Binärzähler zur internen Adressenerzeugung ADI bewirkt wird. Gleichzeitig mit dem Abspeichern der Codiererwerte wird eine Zusatzinformation ZI gebildet. Diese besteht zum einen in der Anzahl der positiven und negativen Zeichenwechsel ZWP und ZWN auf getrennten Binärzählern und zum anderen in einer Information derart, in welcher von z. B. vier Wertebereichen des Codierers Abtastwerte vorkommen, getrennt nach ZWP- und ZWN-Werten.

Nachstehend wird ein Beispiel für die Zusatzinformation angegeben : Dabei wird angenommen, daß Werte in den Gruppen I und IV bei Einteilung der Codiererwerte in Gruppen von 1 bis IV vorkommen.

B7                    B0

0  0  0  0  1  0  0  1

Anzeige für Wert (e)
im Bereich IV

Anzeige für Werte
im Bereich I

Die Zusatzinformation dient der schnelleren Verarbeitungsmöglichkeit im Mikroprozessor.

Nach Ablauf eines Bewertungsintervalles, welches entweder direkt vom Mikroprozessor MP bestimmt werden kann oder auch extern gesteuert sein kann, werden die Umschalter US1 und US2 bestätigt und der Adresszähler intern ADI wird auf 0 gestellt. Der Mikroprozessor MP verfügt jetzt mit seinem Adress-Bus und Steuersignalen über die vorher gespeicherten Daten und die Zusatzinformation.

Nach Verarbeitung der Daten im Mikroprozessor MP gibt dieser bei Bedarf neue Stellinformationen an den Zwischenspeicher ZS ab, womit sowohl der Phasenschieber PS als auch die Nachführung des Generators G und eine Korrektur der Entscheiderwelle am Begrenzer BG erfolgen. Aus den berechneten Daten im Mikroprozessor MP ergeben sich gleichzeitig Qualitätswerte des Datenstromes, mit denen logisch weiter im System operiert werden kann.

Diese Schaltungsanordnung ist allein durch Programmveränderungen sehr flexibel anzuwenden. Vereinfachend können auch die Komponenten eines Speicherblockes weggelassen werden, falls nicht permanente Datenüberwachung erforderlich ist. Vorteilhaft läßt sich diese Codiereranordnung auch bei allen Mikroprozessoren ohne direkte Divisionsbefehle einsetzen, indem die Zusatzinformation mit den Angaben der positiven und negativen Zeichenwechsel ZWP und ZWN auf die jeweils höchst enthaltene Zweierpotenz beschränkt wird und dadurch die Division durch Schiebebefehle ersetzt werden kann.

Nachfolgend werden nochmals die Vorteile der erfindungsgemäßen Schaltungsanordnungen zusammenfassend wiedergegeben.

# 0 081 835

Mit der Erfassung der Signalisierungszeichenwechsel und deren Veränderung in einem Phasenmesser und der folgenden Auswertung in einem Mikroprozessor können gleichzeitig folgende Kriterien abgeleitet werden : Empfangstaktgewinnung, Korrektur des Normalfrequenzgenerators, optimale Lesesicherheit durch Verschieben der Entscheiderschwelle am Schwellwertentscheider, Empfangsqualitätaussage über Jitter und Feldstärkeauswertung (FUKO-Auswahl) sowie die Block- und Rahmensynchronisation. In Organisationskanälen mit Vielfachzugriff erfolgt die Block- und Rahmensynchronisation einer asynchronen Sende/Empfangsstelle über den Ähnlichkeitsvergleich von teilblockweise ermittelten Empfangsqualitäts- und Empfangstaktphasenwerten. Die Korrektur des Zeichendauerunterschiedes auf 0 geschieht über die Schwellwerteinstellung des Schwellwertentscheiders innerhalb des Begrenzers. Ferner ist eine individuelle Einstellung der Nachführgeschwindigkeit für die Empfangstaktgewinnung, die Korrektur des Normalfrequenzgenerators, die optimale Lesesicherheit und die Empfangsqualitätsaussage über Jitter und Feldstärkeauswertung möglich.

## Patentansprüche

1. Regenerator für ein digitales Nachrichtensystem, der mit Empfangszeichen im Basisband gespeist wird und eine Regelschleife aufweist zur Erzeugung eines von der mittleren Zeilengeschwindigkeit abhängigen Taktes zur Abtastung der empfangenen Zeichen, dadurch gekennzeichnet, daß die Taktregelschleife einen Mikroprozessor (MP) enthält, der eingangsseitig über einen Zählcodierer (ZK) mit einem Zeichenwechseldetektor (ZWD) verbunden ist und mit einem seiner Ausgänge einen Phasenschieber (PS) steuert, dem an einem zweiten Eingang ein mit einer Nachführung (NAC) versehener Normalfrequenzgenerator (G) angeschaltet ist, und dessen Ausgang mit einem im Empfangsweg liegenden Regenerations-Flip-Flop (RFF) verbunden ist, und daß weitere Ausgänge des Mikroprozessors (MP) mit der Nachführung (NAC) des Normalfrequenzgenerators (G) und einem im Empfangsweg vor der Taktregelschleife eingeschalteten Begrenzer (BG) verbunden sind sowie durch den Mikroprozessor (MP) und den Zählcodierer (ZK) ermittelte Meßwerte und Informationen zur Jittermessung und Rahmen- und Blocksynchronisation liefern (Fig. 1).

2. Regenerator nach Anspruch 1, dadurch gekennzeichnet, daß der Zählcodierer (ZK) mit einem Ausgang für positiven und mit einem Ausgang für negativen Zeichenwechsel des Zeichenwechseldetektors (ZWD) verbunden ist, daß der Zählcodierer (ZK) einen Bewertungszähler (BWZ) mit zwei Ausgängen enthält, dessen einer eine von einem internen, starren Bezugstakt abgeleitete sägezahnförmige, bitbreite Bewertungskennlinie und dessen anderer eine hierzu um Bit/2 verschobene Sägezahnkennlinie liefert, mit denen die Lage der Zeichenwechsel verglichen wird, daß der Zählcodierer (ZK) ferner eine Decodiereinrichtung (DEKU) mit zwei Ausgängen enthält zur Ermittlung der Zeichenwechsel im Bereich des Sprungs der Sägezahnfunktion (Unsicherheitsbereich) der nicht verschobenen und der um Bit/2 verschobenen Bewertungskennlinie, daß die Ausgänge des Bewertungszählers (BWZ) und der Decodiereinrichtung (DEKU) über vom Zeichenwechseldetektor (ZWD) gesteuerte Schalter (SAP, SAN bzw. SUP, SUN) mit Doppelakkumulatoranordnungen (ABP, ABN) zur Ermittlung des zeitlichen Mittelwertes der Zeichenwechsel bzw. mit Ereigniszählern (UZP, UZN) zur zeichenwechselpolaren Erfassung von Steuerpulsen im Unsicherheitsbereich verbunden sind und daß der Zählcodierer (ZK) ferner eine Bewertungsintervallsteuerung (BWS) zur Festlegung des Bewertungszeitraumes enthält sowie einen Zwischenspeicher (ZS), in dem die Gesamtinformation eines Bewertungsintervalles vor Eingabe in den Mikroprozessor (MP) zwischengespeichert wird (Fig. 3).

3. Regenerator nach Anspruch 1, dadurch gekennzeichnet, daß der Zählcodierer (ZK) einen Zeichenwechselzähler (ZWP) für positiven und einen Zeichenwechselzähler (ZWN) für negativen Zeichenwechsel sowie jeweils eine über einen Adresszähler (AZM) angesteuerte Multiplexeinrichtung (ZMP, ZMN) für positiven und negativen Zeichenwechsel enthält, die jeweils mit dem betreffenden Ausgang des Zeichenwechseldetektors (ZWD) verbunden sind, daß die Ausgänge der Multiplexeinrichtungen (ZMP, ZMN) mit Zählcodierketten (ZKP, ZKN) verbunden sind, die aus Ereigniszählern bestehen, welche über die jeweilige Multiplexerstellung zyklisch angesprochen werden, und daß der Zählcodierer (ZK) ferner eine Bewertungsintervallsteuerung (BWS) zur Festlegung des Bewertungszeitraumes enthält sowie einen Zwischenspeicher (RAM), in dem die Gesamtinformation eines Bewertungsintervalls vor Eingabe in den Mikroprozessor (MP) zwischengespeichert wird (Fig. 5).

4. Regenerator nach Anspruch 3, dadurch gekennzeichnet, daß im Mikroprozessor (MP) eine Adressverschiebung zur Mittelung der beiden Zeichenwechsel-Verteilungsfunktionen erfolgt.

5. Regenerator nach Anspruch 1, dadurch gekennzeichnet, daß die beiden Ausgänge des Zeichenwechseldetektors (ZWD) für positiven und negativen Zeichenwechsel parallel mit zwei Speicheranordnungen verbunden sind, von denen jede aus einem Baustein (ZI1, ZI2) für Zusatzinformationen, einem Speicher (RAM1, RAM2) und einem Umschalter (US1, US2) besteht, die in Bezug auf den Mikroprozessor (MP) und den Codierer gegensinnig wirken, daß die beiden Ausgänge des Zeichenwechseldetektors (ZWD) ferner mit den beiden Eingängen eines Binärzählers zur internen Adressenerzeugung (ADI) verbunden sind, daß ein eine binäre Zahlenfolge von 0 bis n mit einem Vielfachen des Nachrichtentaktes erzeugender Bewertungszähler (BWZ) vorgesehen ist, der eingangsseitig mit einem dem Normalfrequenzgenerator (G) nachgeschalteten Teiler (T) und ausgangsseitig mit den Bausteinen

(ZI1, ZI2) für die Zusatzinformationen und den Speichern (RAM1, RAM2) verbunden ist und daß ferner ein mit dem Mikroprozessor (MP) über einen Datenbus verbundener Zwischenspeicher (ZS) vorgesehen ist, dessen weitere Ausgänge an den Phasenschieber (PS), die Nachführung (NAC) des Normalfrequenzgenerators (G) und den Begrenzer (BG) angeschlossen sind (Fig. 8).

**Claims**

1. A regenerator for a digital communications system which is fed with received characters in the base band and has a regulating loop for the generation of a clock pulse train, which is dependent upon the mean line speed, for the sampling of the received characters, characterised in that the clock pulse regulating loop includes a microprocessor (MP) which at its input is connected via a counting coder (ZK) to a character-change detector (ZWD), and at one of its outputs controls a phase shift device (PS) which is connected, at a second input, to a standard frequency generator (G) which is provided with a follow-up control unit ·(NAC), and whose output is connected to a regeneration flip-flop (RFF) located in the receiving arm, and that further outputs of the microprocessor (MP) are connected to the follow-up control unit (NAC) of the standard frequency generator (G) and to a limiter (BG) which is connected in the receiving arm prior to the clock pulse regulating loop, and supply measured values determined by the microprocessor (MP) and the counting coder (ZK) and items of information for jitter measurement and frame- and block synchronisation (Fig. 1).

2. A regenerator as claimed in claim 1, characterised in that the counting coder (ZK) is connected to one output for a positive character change and to one output for a negative character change of the character-change detector (ZWD), that the counting coder (ZK) includes an evaluation counter (BWZ) having two outputs, one of which supplies a saw-tooth, bit-wide evaluation curve which is derived from an internal, fixed reference clock pulse train, and the other of which supplies a saw-tooth curve shifted in relation to the former by bit/2, with which the position of the character changes is compared, that the counting coder (ZK) also includes a decoder (DEKU) having two outputs for determining the character changes in the region of the jump in the saw-tooth function (uncertainty range) of the non-shifted evaluation curve and the evaluation curve which has been shifted by bit/2, that the outputs of the evaluation counter (BWZ) and of the decoder (DEKU) are connected via switches (SAP, SAN and SUP, SUN), controlled by means of the character-change detector (ZWD), to double accumulator arrangements (ABP, ABN) for the determination of the time mean value of the character change, and to event counters (UZP, UZN) for detecting control pulses, in terms of character change polarity, in the uncertainty range, and that the counting coder (ZK) further includes an evaluation interval control unit (BWS) for establishing the evaluation period, and an intermediate store (ZS) in which the overall information of an evaluation interval is intermediately stored prior to input into the microprocessor (MP) (Fig. 3).

3. A regenerator as claimed in claim 1, characterised in that the counting coder (ZK) includes a character-change counter (ZWP) for a positive character change, and a character change counter (ZWN) for a negative character change, and a multiplex device (ZMP, ZMN) for positive and negative character change respectively, each of which is driven via an address counter (AZM) and is connected to the relevant output of the character-change detector (ZWD), that the outputs of the multiplex devices (ZMP, ZMN) are connected to counting coder chains (ZKP, ZKN) which comprise event counters which are cyclically approached via the multiplexer position in question, and that the counting coder (ZK) further includes an evaluation interval control unit (BWS) for establishing the evaluation interval, and an intermediate store (RAM) in which the overall information of an evaluation interval is intermediately stored prior to input into the microprocessor (MP) (Fig. 5).

4. A regenerator as claimed in claim 3, characterised in that in the microprocessor (MP) an address shift takes place in order to calculate the mean of the two character change distribution functions.

5. A regenerator as claimed in claim 1, characterised in that the two outputs of the character-change detector (ZWD) for a positive and a negative character change are connected in parallel to two storage arrangements, each of which comprises a module (ZI1, ZI2) for additional information, a store (RAM1, RAM2), and a change-over switch (US1, US2), which operate in opposing fashion relative to the microprocessor (MP) and the coder, that the two outputs of the character-change detector (ZWD) are also connected to the two inputs of a binary counter for internal address generation (ADI), that an evaluation counter (BWZ) is provided which produces a binary numerical sequence of 0 to n with a multiple of the communication clock pulse train, and which is connected at its input to a divider (T) which is connected to the output end of the standard frequency generator (G), and at its output is connected to the modules (ZI1, ZI2) for the additional information and to the stores (RAM1, RAM2), and that an intermediate store (ZS) is also provided which is connected to the microprocessor (MP) via a data bus and whose other outputs are connected to the phase shift device (PS), the follow-up control unit (NAC) of the standard frequency generator (G) and the limiter (BG) (Fig. 8).

**Revendications**

1. Régénérateur pour un système de communication numérique qui est alimenté avec des signaux de réception dans la bande de base et qui comporte une boucle de régulation pour produire une cadence qui dépend de la vitesse de lignes moyennes pour l'échantillonnage du signe reçu, caractérisé par le fait que la boucle de régulation de la cadence comporte un microprocesseur (MP) qui est relié, du côté entrée, et par l'intermédiaire d'un codeur de comptage (ZK), à un détecteur de changement de ligne, et qui par l'intermédiaire de ses sorties commande un déphaseur (PS) auquel est relié, à une seconde sortie, un générateur de fréquence normale (G) à système de poursuite, et dont la sortie est reliée à un multivibrateur bistable de régénération (RFF) situé dans la voie de réception, et que d'autres sorties du microprocesseur (MP) sont reliées avec le système de poursuite (NAC) du générateur de fréquence normale (G) et avec un limiteur (BG) monté dans la voie de réception, en amont de la boucle de régulation de la cadence et fournissent des valeurs de mesure déterminées par le microprocesseur (MP) et par le codeur de comptage (ZK) et des informations pour la gigue des impulsions et pour la synchronisation des trames et des blocs (figure 1).

2. Régénérateur selon la revendication 1, caractérisé par le fait que le codeur de comptage (ZK) est relié à une sortie pour le changement de signe positif et à une sortie pour le changement de signe négatif du détecteur de changement de signe (ZWD), que le codeur de comptage (ZK) comporte un compteur de pondération (BWZ) avec deux sorties, dont l'une fournit une ligne caractéristique de pondération de la largeur d'un bit, de la forme en dents de scie, et dérivée à partir d'une cadence de référence interne et rigide, et dont l'autre fournit une ligne caractéristique en dents de scie décalée par rapport à la première de un bit/2, lignes caractéristiques avec lesquelles on compare la position du changement de signe, que le codeur de comptage (ZK) comporte, en outre, un dispositif de décodage (DEKU) à deux sorties pour déterminer le changement de signe au niveau du saut de la fonction en dents de scie (zone d'insécurité), de la ligne caractéristique de pondération qui n'est pas décalée et celle qui est décalée de un bit/2, que les sorties des compteurs de pondération (BWZ) et le dispositif de décodage (DEKU) sont reliés, par l'intermédiaire de commutateurs (SAP, SAN et SUP, SUN) commandés par le détecteur de changement de signe (ZWD), avec des dispositifs à double accumulateur (ABP, ABN), en vue de déterminer la valeur moyenne temporelle du changement de signe, ou avec des compteurs d'événements (UZP, UZN) pour saisir le changement de polarité de signe d'impulsions de commande dans la zone d'insécurité, et que le codeur de comptage (ZK) comporte, en outre, un dispositif de commande de l'intervalle de pondération (BWS) pour déterminer l'intervalle de pondération, ainsi qu'une mémoire intermédiaire (ZS) dans laquelle est mémorisée temporairement l'information totale d'un intervalle de pondération, avant l'introduction dans le microprocesseur (MP) (figure 3).

3. Régénérateur selon la revendication 1, caractérisé par le fait que le codeur de comptage (ZK) comporte un compteur de changement de signe (ZWP) pour un changement positif de signe et un compteur de changement de signe (ZWN) pour un changement négatif de signe, ainsi que respectivement un dispositif de multiplexage (ZMP, ZMN), attaqué par un compteur d'adresses (AZM), pour un changement de signe positif et négatif, lesquels dispositifs de multiplexage sont respectivement reliés avec la sortie correspondante du détecteur de changement de signe (ZWD), que les sorties des dispositifs de multiplexage (ZMP, ZMN) sont reliés à des chaînes de codage de comptage (ZKP, ZKN) qui sont constituées par des compteurs d'événements qui sont attaqués cycliquement par l'intermédiaire de l'établissement de multiplex concernés et que le codeur de comptage (ZK) comporte, en outre une commande de l'intervalle de pondération (BWS) pour déterminer l'intervalle temporel de pondération, ainsi qu'une mémoire intermédiaire (RAM) dans laquelle est mémorisée temporairement l'information totale d'un intervalle de pondération, avant introduction dans le microprocesseur (MP) (figure 5).

4. Régénérateur selon la revendication 3, caractérisé par le fait que dans le processeur (MP) a lieu un décalage d'adresse pour établir la moyenne des deux fonctions de répartition des signes.

5. Régénérateur selon la revendication 1, caractérisé par le fait que les deux sorties du détecteur de changement de signe (ZWD) pour le changement de signe positif et négatif, est relié à deux dispositifs à mémoires dont chacun est constitué par un module (ZI1, ZI2) pour des informations supplémentaires, par une mémoire (RAM1, RAM2) et par un commutateur (US1, US2), dispositifs à mémoires qui agissent en sens contraire par rapport au microprocesseur (MP) et par rapport au codeur, que les deux sorties du détecteur de changement de signe (ZWD) sont, en outre, reliées aux deux entrées d'un compteur binaire pour la production interne d'adresses (ADI), qu'il est prévu un compteur de pondération (BWZ) qui produit une série de chiffres de 0 à n avec un multiple de la cadence de la communication, lequel compteur de pondération est relié, avec un diviseur (T) monté en aval du générateur de fréquence normale (G), et, du côté sortie, avec les modules (ZI1, ZI2) pour les informations supplémentaires et avec les mémoires (RAM1, RAM2) et, qu'en outre, il est prévu une mémoire intermédiaire (ZS) reliée au microprocesseur (MP) par l'intermédiaire d'un bus de données, mémoire intermédiaire dont les autres sorties sont reliées au déphaseur (PS), au dispositif de poursuite (NAC) du générateur de fréquence normale (G), et au limiteur (BG) (figure 8).

# FIG 1

# FIG 2

# FIG 3

# FIG 4

Stromflußwinkel

$t_{Bit\ ist}\ log\ 1$  $t_{Bit\ soll}$

$t_{Bit\ ist}\ log\ 0$

① Basisband nach BG (NRZ-Daten)

② ZWD +

③ ZWD −

$Y_0$  $Z_0$  $Y'_0$  n  0  ④ $BWZ_{0°}$

$Y_{180}$  $Z_{180}$  $Y_{180}$  n  0  ⑤ $BWZ_{180°}$

⑥ $DEKU_{0°}$

⑦ $DEKU_{180°}$

$+Y_0 (+Y_{180})$  $+Y'_0 (+Y'_{180})$  ⑧ Accuwert $ABP_{0(180°)}$

$+1$  $+1$  ⑨ Zählerstand ZWP

$(+0)$  $+0$  $(+0)$  $+0$  $(+0)$  $+0$  ⑩ Zählerstand $UZP_{0(180°)}$

$(+0)$  $+0$  $(+1)$  $+0$  $(+0)$  $+0$  ⑪ Zählerstand $UZN_{0(180°)}$

$+1$  ⑫ Zählerstand ZWN

$+Z_0 (+Z_{180})$  ⑬ Accuwert $ABN_{0(180°)}$

$Accu + (Z_0 - Z_0 - 1)$ bzw. $Accu + (Z_{180} - Z_{180} - 1)$  ⑭ Accuwert $AJN_{0(180°)}$

# FIG 5

# FIG 6

① Ausg. BG (NRZ)

② Ausg. ZWD+

③ Ausg. ZWD-

④ Zählerst. ZWP

⑤ Zählerst. ZWN

⑥a Zähl. 0 adr.
⑥b Zähl. 1 adr.
⑥c Zähl. n adr.

Multipl.- durch- schaltg. ZMP, ZMN

⑦a Zähl. 0
⑦b Zähl. 1
⑦c Zähl. n

Zählerst. Ereignis- zähler in ZKP

⑧ Zähl. 0 Zählerst. Ereignis- zähler in ZKN

# FIG 7

Zählerstand Ereigniszähler X

n-1 n  1  2  3  4  5          n-2  n
                             n-1

Ereigniszähleradresse (ZKP, ZKN)

# FIG 8